# EUROPEAN PATENT SPECIFICATION

(11) **EP 2 551 875 B1**
(45) Date of publication and mention of the grant of the patent: **20.12.2017**
(21) Application number: 10848371.0
(22) Date of filing: 24.03.2010
(51) Int. Cl.: H01H 11/00, H01H 13/02, C09D 11/101

(54) **PROCESS FOR PRODUCING BUTTON WITH PROTRUDENT CHARACTER**
VERFAHREN ZUR HERSTELLUNG EINES HERVORSTEHENDEN BUTTONS
PROCÉDÉ DE FABRICATION D'UN BOUTON DOTÉ D'UN CARACTÈRE PROÉMINENT

(43) Date of publication of application: 30.01.2013
(73) Proprietor: Mitsubishi Electric Corporation, Tokyo 100-8310 (JP)
(72) Inventor: YUASA, Eiji, Tokyo 100-8310 (JP)
(74) Representative: Hoffmann Eitle
(86) International application number: PCT/JP2010/055062
(87) International publication number: WO 2011/117978

(56) References cited:
- JP-A- 4 067 521
- JP-A- 4 067 521
- JP-A- 10 092 258
- JP-A- 10 092 258
- JP-A- 59 173 915
- JP-U- 63 192 620
- US-A1- 2008 239 045

## Description

### TECHNICAL FIELD

The present invention relates to a method for manufacturing an embossed button that is disposed on an elevator operating panel, for example.

### BACKGROUND ART

In conventional operating panels with embossing, embossing is formed on a resin pressed portion of an operating switch (see Patent Literature 1, for example).

In conventional elevator operating panels, symbols or marks that represent functions of operating buttons are formed as embossing on button surfaces (see Patent Literature 2, for example).

In conventional methods for manufacturing a panel switch board, a die that is raised around a switch pressing position is formed, and a key-top portion that has a centrally-raised shape is formed inside the die. The die is formed by screen printing using an ultraviolet curing resin (see Patent Literature 3, for example).

In conventional methods for manufacturing a molded component, Braille is printed on a front surface of an operating panel by screen printing (see Patent Literature 4, for example). JP 10 092258 A discloses a method for manufacturing an embossed button, according to the preamble of claim 1. US 2008/0239045 A1 describes various inks set for inkjet recording and various methods for generating a color image on a recording medium.

### CITATION LIST

### PATENT LITERATURE

[Patent Literature 1]
   Japanese Patent Laid-Open No. 2003-186408 (Gazette)
[Patent Literature 2]
   Japanese Patent Laid-Open No. 2003-12248 (Gazette)
[Patent Literature 3]
   Japanese Patent Laid-Open No. HEI 5-62558 (Gazette)
[Patent Literature 4]
   Japanese Patent Laid-Open No. 2004-86438 (Gazette)

### SUMMARY OF THE INVENTION

### PROBLEM TO BE SOLVED BY THE INVENTION

However, in conventional operating panels such as those shown in Patent Literature 1 and 2, since a die is required in order to form the embossing, the cost is high, and the buttons are expensive, particularly if small amounts of a large variety of buttons such as the operating buttons of elevator operating panels are produced. If attempts are made to form embossing by screen printing as shown in Patent Literature 3 and 4, it becomes necessary to increase ink viscosity, and as a result, minute irregularities occur on the front surface of the embossing, reducing decorative design and also degrading feel during operation.

The present invention aims to solve the above problems and an object of the present invention is to provide a method for manufacturing an embossed button that can improve smoothness of a surface of an embossed portion while ensuring sufficient amount of protrusion of the embossed portion, and that can also reduce costs.

### MEANS FOR SOLVING THE PROBLEM

In order to achieve the above object, according to one aspect of the present invention, there is provided a method for manufacturing an embossed button as described in claim 1. Advantageous embodiments are dscribed in the dependent claims.

### EFFECTS OF THE INVENTION

In the method for manufacturing an embossed button according to the present invention, because the ink layers are laminated by performing screen printing a plurality of times, costs can be reduced compared to when a die is used, and a sufficient amount of protrusion of the embossed portion can also be ensured, and because at least the top layer is printed when the preceding ink layer is in a semicured state, minute irregularities that arise at the surface of the ink layers are absorbed by the semicured ink layer, enabling surface smoothness of the embossed portion to be improved.

### BRIEF DESCRIPTION OF THE DRAWINGS

Figure 1 is a perspective that shows an embossed button according to Embodiment 1 of the present invention;
Figure 2 is a front elevation that shows the embossed button from Figure 1;
Figure 3 is a side elevation that shows the embossed button from Figure 1;
Figure 4 is a side elevation that shows an intermediate state during manufacturing of the embossed button from Figure 1;
Figure 5 is a side elevation that shows a step of transferring an ultraviolet curing ink from Figure 4 through to a button main body;
Figure 6 is a side elevation that shows a step of curing a first ink layer;
Figure 7 is a side elevation that shows a step of setting a screen printing plate on the button main body from Figure 6;
Figure 8 is a side elevation that shows a step of transferring an ultraviolet curing ink from Figure 7 through to a button main body; and
Figure 9 is a side elevation that shows a step of curing a second ink layer.

### DESCRIPTION OF EMBODIMENTS

A preferred embodiment of the present invention will now be explained with reference to the drawings.

### Embodiment 1

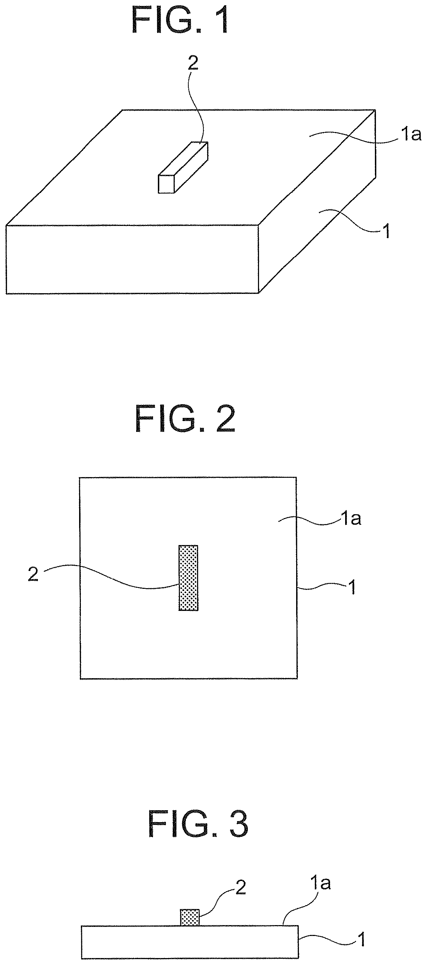

Figure 1 is a perspective that shows an embossed button according to Embodiment 1 of the present invention, Figure 2 is a front elevation that shows the embossed button from Figure 1, and Figure 3 is a side elevation that shows the embossed button from Figure 1, an operating button of an elevator operating panel being shown as an example.

In the figures, an embossed button has: a button main body 1 that is made of a plastic; and an embossed portion 2 that is disposed on the button main body 1 by screen printing using an ultraviolet curing ink. The button main body 1 has: a front surface that is operated by being pressed by a user (an operating surface) 1a.

The embossed portion 2 is disposed centrally on the front surface 1a. The embossed portion 2 has a frontal shape in a shape of a character (in this example, "1"), and projects outward from the front surface 1a. The amount of protrusion of the embossed portion 2 from the front surface 1a (amount of protrusion) is a height such that the user can recognize the character by touch, and is greater than or equal to 0.8 mm, for example. The amount of protrusion of the embossed portion 2 for a universal design of this kind is set several times greater than the amount of protrusion of Braille.

Next, a method for manufacturing the embossed button from Figure 1 will be explained.

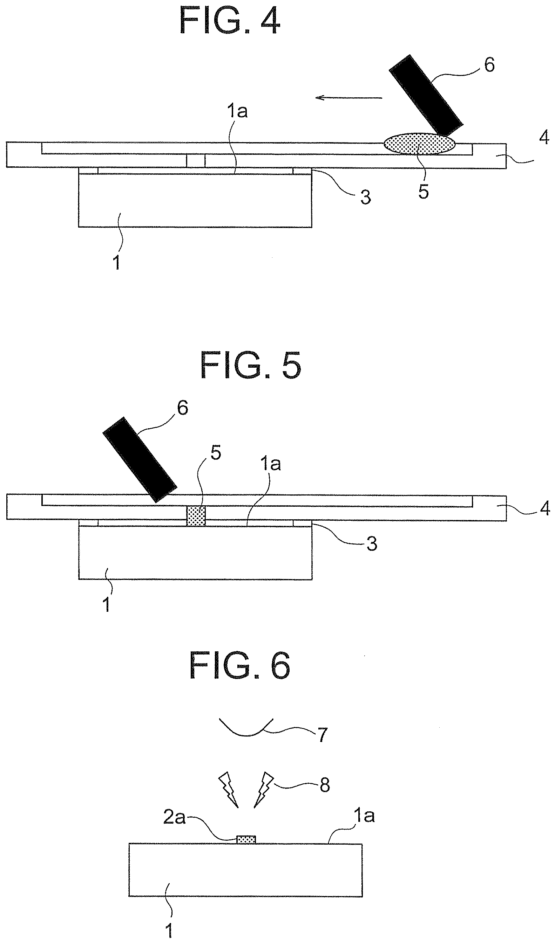

First, as shown in Figure 4, a screen printing plate 4 is placed above the button main body 1 by means of a spacer 3 that has a predetermined thickness, and an ultraviolet curing ink 5 is placed on the screen printing plate 4. Next, as shown in Figure 5, a squeegee 6 is moved to transfer the ultraviolet curing ink 5 through the pores of the screen printing plate 4 onto the button main body 1.

As shown in Figure 6, the screen printing plate 4 is subsequently removed, and ultra-violet rays 8 are applied to the button main body 1 for a predetermined amount of time using an ultra-violet ray irradiator 7. The ultraviolet curing ink 5 on the button main body 1 is thereby cured to form a first ink layer 2a.

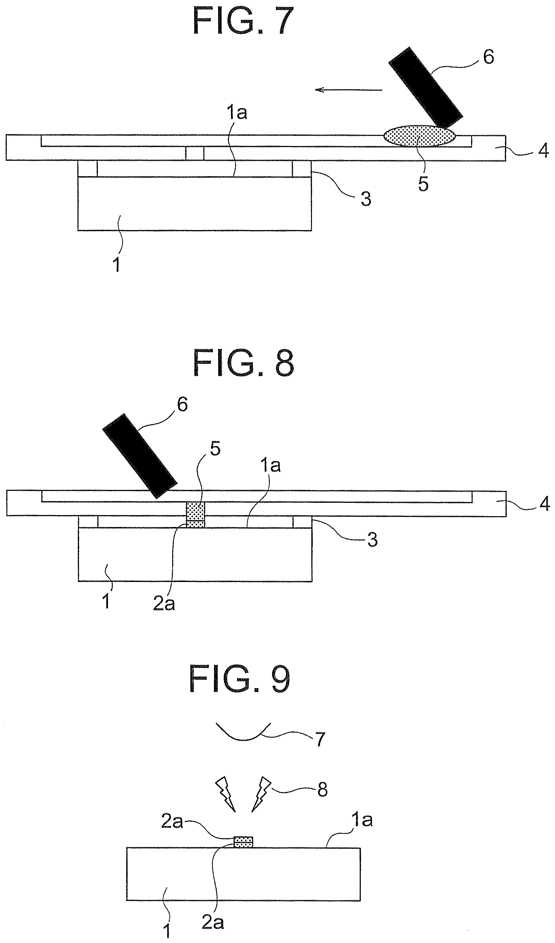

Next, as shown in Figures 7 through 9, a second ink layer 2a is formed on the first ink layer 2a in a similar procedure to that of the first ink layer 2a. Steps of this kind are repeated for a total of N times until the amount of protrusion of the embossed portion 2 from the front surface 1a reaches a target value. If the thickness of the ink layer 2a is approximately 0.2 through 0.3 mm, and the target value of the amount of protrusion of the embossed portion 2 is greater than or equal to 0.8 mm, for example, N is 3 or 4 times. As the count of the screen printing increases, a spacer 3 that has a larger thickness dimension is used.

An ink that contains N-vinyl-2-pyrrolidone, an epoxy acrylate resin, and an acrylate monomer as major components, and to which approximately two percent benzophenone is added as a photoinitiator (an HUG-series screen ink manufactured by Seiko advance Ltd., for example), is used as the ultraviolet curing ink 5. Furthermore, a thixotropic ink is used as the ultraviolet curing ink 5.

A top layer, being the N*th* ink layer 2a, which is laminated last, when the (N - 1*th*) ink layer 2a, i.e., the preceding layer, is in a semicured state, that is, is cured to a predetermined degree without completely curing. Specifically, the ultraviolet irradiation time for curing the ink layer 2a that is one layer below the top layer is set so as to be shorter than the ultraviolet irradiation time for curing the top layer.

It is preferable for the semicured state of the ink layer 2a that is one layer below when the top layer is formed to be a state such that the ink layer 2a is not crushed, and the ink layer 2a does not adhere to the screen printing plate 4, when the screen printing plate 4 is mounted.

In addition, in this example, the viscosity of the ultraviolet curing ink 5 is increased by raising the percentage content of N-vinyl-2-pyrrolidone in the ultraviolet curing ink 5 to approximately 10 percent (normally approximately 8.7 percent), thereby making it easier to form a convex shape.

Furthermore, an uncured viscosity of the ultraviolet curing ink 5 that is used in the top layer is lower than an uncured viscosity of the ink that is used in a remainder of the ink layers 2a. Specifically, the uncured viscosity of the top layer is made 5 through 30 percent, even more preferably 5 through 20 percent (10 percent, for example), lower than the uncured viscosity of the other ink layers 2a.

According to a method for manufacturing an embossed button of this kind, because the embossed portion 2 is formed by printing resin in multiple layers by screen printing, a prescribed amount of embossment can easily be ensured. Since operating buttons of elevator operating panels (car operating panels or landing operating panels), for example, require production in small amounts of large variety, initial costs are quite high when manufacturing using a die, but costs can be significantly reduced using screen printing.

If an ultraviolet curing ink 5 that has a high viscosity is used to laminate the ink layers 2a, minute irregularities formed by the screen printing plate 4 remain on the surface of the embossed portion 2, but because the top layer is formed when the ink layer 2a that is one layer below the top layer is in a semicured state, the minute irregularities are absorbed by the semicured ink layer 2a, improving surface smoothness (leveling) of the embossed portion 2. The surface of the embossed portion 2 is thereby made glossy, enabling decorative design and feel to be improved.

Because the ultraviolet curing ink 5 is used, and the cured state of the first ink layer 2a in the top layer is controlled by ultraviolet irradiation time, the cured state of the ink layer 2a that is one layer below the top layer can easily be placed in the desired state.

In addition, because the uncured viscosity of the top layer is lower than the uncured viscosity of the other ink layers 2a, surface smoothness of the embossed portion 2 can be further improved.

Moreover, in Embodiment 1, only the top layer is formed when the ink layer 2a in the preceding layer is in a semicured state, but other ink layers 2a may also be formed when the ink layer 2a in the preceding layer is in a semicured state, enabling surface smoothness of the embossed portion 2 to be further improved.

In Embodiment 1, the ultraviolet curing ink 5 is used as a curable ink, but the ink is not limited thereto, and may also be constituted by a thermosetting resin, or a two-liquid hardening resin (an acrylic-based adhesive), for example. The HARDLOC series that is manufactured by DENKI KAGAKU KOGYO KABUSHIKI KAISHA, for example, can be used as the acrylic-based adhesive.

In addition, the embossed button according to the present invention is not limited to operating buttons of elevator operating panels.

Furthermore, the character that is displayed by the embossed portion 2 is not limited to a numeric character, and may of course also be an alphabetical character or an ideograph, for example, or a symbol or a mark, etc.

## Claims

1. A method for manufacturing an embossed button comprising a button main body (1) and an embossed portion (2) protruding outwards from a main surface (2a) of the button main body, in which a plurality of ink layers (2a) are laminated by repeating a plurality of times:
a step of performing screen printing using a curable ink on the front surface (1a) of the button main body (1); and
a step of curing the printed ink, thereby forming said embossed portion (2) that protrudes from the front surface (1a) by a predetermined amount of protrusion, **characterised in that**:
a top layer that is an ink layer (2a) that is laminated last is printed when a preceding ink layer (2a) is in a semicured state.

2. A method for manufacturing an embossed button according to Claim 1, wherein an uncured viscosity of ink (5) that is used in the top layer is lower than an uncured viscosity of ink (5) that is used in a remainder of the ink layers (2a).

3. A method for manufacturing an embossed button according to Claim 1, wherein:
the ink (5) is an ultraviolet curing ink (5); and
the ink layers (2a) are cured by applying ultra-violet rays to the ink layers (2a) each time the screen printing is performed.

4. A method for manufacturing an embossed button according to Claim 3, wherein an ultraviolet irradiation time for curing the ink layer (2a) preceding the top layer is made shorter than an ultraviolet irradiation time for curing the top layer.

## Patentansprüche

1. Verfahren zum Herstellen einer aufgeprägten Taste, umfassend einen Tastenhauptkörper (1) und einen aufgeprägten Bereich (2), der auswärts von einer Hauptoberfläche (2a) des Tastenhauptkörpers vorragt, wobei eine Vielzahl von Tintenschichten (2a) laminiert wird, indem mehrmals wiederholt wird:
ein Schritt des Durchführens von Siebdruck unter Verwendung einer aushärtbaren Tinte auf der Frontoberfläche (1a) des Tastenhauptkörpers (1); und
einen Schritt des Aushärtens der gedruckten Tinte,
wodurch der aufgeprägte Bereich (2) gebildet wird, welcher von der Frontoberfläche (1a) um einen vorbestimmten Vorragungsbetrag vorragt, **dadurch gekennzeichnet, dass**
eine Oberschicht, die eine Tintenschicht (2a) ist, die zuletzt laminiert wird, gedruckt wird, wenn eine vorherige Tintenschicht (2a) in einem halbausgehärteten Zustand ist.

2. Verfahren zum Herstellen einer aufgeprägten Taste gemäß Anspruch 1, wobei eine unausgehärtete Viskosität von Tinte (5), die in der Oberschicht verwendet wird, niedriger als eine unausgehärtete Viskosität von Tinte ist, die in einem Rest der Tintenschichten (2a) verwendet wird.

3. Verfahren zum Herstellen einer aufgeprägten Taste gemäß Anspruch 1, wobei:
die Tinte (5) eine ultraviolett aushärtende Tinte (5) ist; und
die Tintenschichten (2a) ausgehärtet werden, indem ultraviolette Strahlen auf die Tintenschichten (2a) aufgebracht werden, jedes Mal, wenn der Siebdruck durchgeführt wird.

4. Verfahren zum Herstellen einer aufgeprägten Taste gemäß Anspruch 3, wobei eine ultraviolette Bestrahlungszeit zum Aushärten der Tintenschicht (2a), die der Oberschicht vorhergeht, kürzer gemacht wird als eine ultraviolette Bestrahlungsschicht zum Aushärten der Oberschicht.

## Revendications

1. Procédé de fabrication d'un bouton gaufré comprenant un corps principal de bouton (1) et une partie gaufrée (2) faisant saillie vers l'extérieur à partir d'une surface principale (2a) du corps principal de bouton, dans lequel une pluralité de couches d'encre (2a) sont stratifiées en répétant plusieurs fois :
une étape de réalisation d'une impression sérigraphique en utilisant une encre durcissable sur la surface avant (1a) du corps principal de bouton (1) ; et
une étape de durcissement de l'encre imprimée, en formant ainsi ladite partie gaufrée (2) qui fait saillie depuis la surface avant (1a) d'une quantité de saillie prédéterminée, **caractérisé en ce que** :
une couche de dessus qui est une couche d'encre (2a) qui est stratifiée en dernier est imprimée lorsqu'une couche d'encre précédente (2a) est dans un état semi-durci.

2. Procédé de fabrication d'un bouton gaufré selon la revendication 1, dans lequel une viscosité non durcie d'encre (5) qui est utilisée dans la couche de dessus est inférieure à une viscosité non durcie d'encre (5) qui est utilisée dans une partie résiduelle des couches d'encre (2a).

3. Procédé de fabrication d'un bouton gaufré selon la revendication 1, dans lequel :
l'encre (5) est une encre durcissable aux ultraviolets (5) ; et
les couches d'encre (2a) sont durcies en appliquant des rayons ultraviolets aux couches d'encre (2a) chaque fois que l'impression sérigraphique est effectuée.

4. Procédé de fabrication d'un bouton gaufré selon la revendication 3, dans lequel un temps d'irradiation aux ultraviolets pour durcir la couche d'encre (2a) précédant la couche de dessus est rendu plus court qu'un temps d'irradiation aux ultraviolets pour durcir la couche de dessus.
